# EUROPÄISCHE PATENTSCHRIFT

(11) **EP 1 001 182 B1**
(45) Veröffentlichungstag und Bekanntmachung des Hinweises auf die Patenterteilung: **21.06.2006**
(21) Anmeldenummer: 99122237.3
(22) Anmeldetag: 08.11.1999
(51) Int. Cl.: F16D 3/38, F16D 3/41

(54) **Kreuzgelenkanordnung für den Einsatz in Gelenkwellen**
Universal joint assembly for an articulated shaft
Ensemble de joint universel pour un arbre articulé

(30) Priorität: 10.11.1998 DE 19851530
(43) Veröffentlichungstag der Anmeldung: 17.05.2000
(73) Patentinhaber: Voith Turbo GmbH & Co. KG, 89522 Heidenheim (DE)
(72) Erfinder: Lindenthal, Hans, 89522 Heidenheim (DE)
(74) Vertreter: Dr. Weitzel & Partner

(56) Entgegenhaltungen:
- CH-A- 346 735
- DE-U- 1 777 132
- FR-A- 2 089 762
- US-A- 3 050 351
- US-A- 4 180 989

## Beschreibung

Die Erfindung betrifft eine Kreuzgelenkanordnung für den Einsatz in Gelenkwellen, im einzelnen mit den Merkmalen aus dem Oberbegriff des Anspruchs 1.

Kreuzgelenkanordnungen, insbesondere Lageranordnungen für Kreuzgelenkanordnungen für den Einsatz in Gelenkwellen sind in einer Vielzahl von Ausführungen für eine Vielzahl von Einsatzbeispielen bekannt. Stellvertretend wird dazu auf einen Sonderdruck Voith Forschung und Konstruktion, Heft 33 (1998), Aufsatz 10 "Entwicklung wälzgelagerter Gelenkwellen für die Hauptantriebe schwerer Walzgerüste" sowie den Voith-Druck G 1135, 11.91, verwiesen. Diese Druckschriften offenbaren Ausführungen von Kreuzgelenkanordnungen für Gelenkwellen, welche wenigstens ein Zapfenkreuz umfassen, welches in wenigstens einer Gelenkgabel gelagert wird. Die Gelenkgabel selbst kann einteilig oder zweiteilig ausgeführt sein. Zur Anbindung des Zapfenkreuzes in der Gelenkgabel ist jeweils für den einzelnen Zapfen eine entsprechende Lageranordnung vorgesehen. Die Lageranordnung umfaßt dabei wenigstens ein Radiallager und vorzugsweise auch ein Axiallager. Für die Anordnung des Axiallagers bestehen eine Vielzahl von Möglichkeiten, wobei jedoch unter Berücksichtigung der auftretenden Verformungen während des Betriebes der Gelenkwelle eine entsprechende konstruktive Auslegung der einzelnen Elemente der Lagerung vorgenommen wird. Aus dem Aufsatz 10 aus Voith Forschung und Konstruktion, Heft 33, ist dabei eine Ausführung mit einem Radial-/Axiallager bekannt, bei welcher die einzelnen Bauelemente der Lagerung, die Dichtungen, die Anschlußkonstruktion der Lager und die das Drehmoment übertragenden Flanschverbindungen hinsichtlich der Spannungsverteilungen und Verformungen unter Last sorgfältig aufeinander abgestimmt sind. Das Radiallager besteht bei dieser Ausführung aus drei vollrolligen Zylinderrollenreihen, die im Innenring bordgeführt sind. Der Radiallager-Innenring stützt sich über einen Bund an den Zapfenstirnseiten ab. Ein nach außen weisender Bund am anderen Ringende bildet die innere Laufbahn des Axiallagers. Die Axialkraft wird bei dieser Ausführung über die Zapfenstirnseite eingeleitet. Durch den konischen Übergang zwischen Zylinder und Grundkörper ist ein Einfädeln des Zapfenkreuzes in die ungeteilte Gelenkgabel trotz großer Zapfenquerschnitte mögl.ch. Außerdem können bei dieser Anordnung die Werkstoffe den unterschied ich zugeordneten Funktionen entsprechend ausgewählt werden, d.h. hochfester Vergütungsstahl für das im Gesenk geschmiedete Zapfenkreuz und gewalzter Einsatzstahl für die Lagerhülse. Die Problematik einer derartigen Lageranordnung besteht darin, daß die einzelnen Wälzlager durch hohe Drehmomentstöße und gleichzeitige Querbeschleunigungen, insbesondere beim Einsatz in Walzwerksantrieben, beansprucht werden. Die stoßartigen Belastungen bei großen und sich rasch verändernden Beugewinkeln verursachen dabei elastische Verformungen der Gelenkgabel sowohl im Bereich der Flansche als auch innerhalb des Gabelauges. Die Bohrung weitet sich und nimmt dabei in der Regel eine unrunde Form an. Die größte Verformung am Zapfenkreuz verursacht jedoch die Einleitung der Umfangskraft. Ihre Richtung osziliert mit dem positiven oder negativen Wert des Betriebsbeugewinkels und wechselt außerdem mit jedem Reversiervorgang. Diese betriebs- sowie konstruktionsbedingten Einflüsse ergeben Fluchtungsfehler mit einer ungünstigen Lasteinleitung in das Lager, nämlich einen Mittenversatz der Gabelbohrung, Schrägstellung der Bohrung, Durchbiegung des Zapfens sowie ein Radialspiel im Wälzlager und die Einfederung des Wälzlagers. Die Folge ist dabei eine ungleichmäßige radiale Druckverteilung in der Lagerbohrung und führt von einer Linien- zur Punktberührung an den Kontaktstellen der Wälzkörper und zu überhöhten Kantenspannungen. Die Wälzlageranschlußteile, Zapfenkreuz und Gelenkgabel, sind deshalb bezogen auf die Verformungswege aufeinander abgestimmt. Da die Axiallager von schweren Kreuzgelenken in der Regel im Wurzelbereich des Zapfens angeordnet sind, führen diese aufgezeigten Einflüsse zu einem Verkippen der Axiallager-Laufbahnen. Den größten Einfluß übt dabei die Verformung des Zapfens an der Wurzel aus, da hier die Krümmung der Biegelinie analog dem Biegemoment am größten ist. Dies führt in einem Segment des Axiallagers zu hohen Kantenspannungen und in dem gegenüberliegenden Segment zum Abheben der Rollen, was eine drastische Tragzahlminderung zur Folge hat. Um einen einfachen konstruktiven Aufbau einer Radial-/Axiallagereinheit der Kreuzgelenke zu ermöglichen, wurden daher bisher die Lagerhülse mit ihren Laufbahnen für beide Lager über Zylinder- und Stirnfläche des Zapfens zentriert und axial fixiert. Biegt sich nun der Zapfen unter einer Last durch, so folgt die Lagerhülse einer Tangente, die an der Biegelinie des Zapfenendes anliegt. Die Planparallelität bleibt somit auch bei Belastung des Zapfenkreuzes erhalten. Ein wesentlicher Nachteil einer derartigen Ausführung besteht jedoch darin, daß die Ausgestaltung der einzelnen Lagerelemente relativ kompliziert ist und eine Vielzahl von Elementen, insbesondere hinsichtlich der Ausführung des Lagerdeckels, bedingen. Bei der konstruktiven Ausführung, insbesondere Auslegung der einzelnen Bauelemente, ist dabei immer auf die möglicherweise auftretenden Verformungswege abzustellen, so daß es nicht möglich ist, unabhängig von der Kenntnis dieser Einflüsse eine befriedigende Konstruktion bereitzustellen.

Eine andere Lösung zur Anbindung der Lagerung ist aus der gattungsbildenden EP 0 785 370 A1 bekannt. Bei dieser ist dem Innenring des Radiallagers in Einbaulage in axialer Richtung innenliegend ein Bund zugeordnet, der sich radial von der Zapfenachse des in der Gelenkgabel gelagerten Zapfens wegerstreckt. Unter axialer Richtung wird eine Richtung im wesentlichen parallel zur Zapfenachse des in der Gelenkgabel gelagerten Zapfens verstanden, wobei die Betrachtungsweise ausgehend von der Gelenkachse erfolgt. Unter Gelenkachse wird dabei die verlängerte Achse des mit der Gelenkgabel verbundenen Bauteiles verstanden, die sich durch den direkten oder in eine Ebene projizierten Schnittpunkt der Zapfenachsen erstreckt. Die Zapfenachsen der zueinander um jeweils 90° versetzten Zapfen können dabei in einer gemeinsamen Ebene liegen oder aber zueinander versetzt in einander parallelen Ebenen. Der Bund des Innenringes des Radiallagers bildet wenigstens mittelbar die in axialer Richtung äußere Lauffläche des Axiallagers. Dies bedeutet, daß der Bund zum einen direkt die Lauffläche für die Rollen oder die andersartig ausgeführten Wälzelemente des Axiallagers bilden kann. Andererseits besteht auch die Möglichkeit, daß lediglich die Lauffläche des Axiallagers, d.h. der Außenring des Axiallagers - in Einbaulage bezogen auf den Zapfen betrachtet -, sich an diesem abstützt. Der Außenring des Radiallagers weist in Einbaulage in axialer Richtung einen inneren Bund auf, der sich radial in Richtung der Zapfenachse des in der Gelenkgabel gelagerten Zapfens erstreckt. Der Bund des Außenringes des Radiallagers bildet wenigstens mittelbar die in axialer Richtung innere Lauffläche des Axiallagers. Der Außenring weist des weiteren einen in Einbaullage in axialer Richtung außenliegenden sogenannten äußeren Bund auf, dem ein Anschlag im Gabelauge zugeordnet ist. Dem Innenring ist des weiteren ein in Einbaulage in axialer Richtung äußerer Bund zugeordnet, der zur Zapfenachse des in der Gelenkgabel gelagerten Zapfens hin ausgerichtet ist und einen axialen Anschlag für den Sitz des Innenringes im stirnseitigen Bereich des Zapfens bildet. Dieser äußere Bund ist kraft- und/oder formschlüssig mit dem in der Gelenkgabel gelagerten Zapfen verbindbar. Dieser Bund kann derart ausgeführt sein, daß dieser mit dem Innenring eine bauliche Einheit bildet. Eine andere Möglichkeit besteht darin, daß der Bund von einem separaten Bauteil gebildet wird. Dieses separate Bauteil kann beispielsweise deckelförmig gestaltet sein. Der Deckel ist vorzugsweise derart gestaltet, daß dieser mit wenigstens einem ersten Teil seiner Deckelinnenfläche, unter welcher die in Einbaulage zur Gelenkachse gerichtete Deckelfläche verstanden wird, auf der Stirnseite des Zapfens des in der Gelenkgabel gelagerten Zapfens aufliegt und mit einem zweiten Teil seiner Deckelinnenfläche in Einbaulage einen Anschlag für den Innenring des Radiallagers bildet. Mit dieser Ausführung wird entgegen der ansonsten angestrebten steifen Lagerkonstruktion eine elastische Anbindung des Axiallagers erreicht. Diese Art der elastischen Anbindung führt zu einem besseren Tragbild der einzelnen Lager und damit einer höheren Lebensdauer der Lagereinheiten und auch der gesamten Kreuzzapfengelenkanordnung. Ein wesentlicher Nachteil einer derartigen Ausführung besteht jedoch darin, daß diese einen erheblichen konstruktiven und fertigungstechnischen Aufwand bedingt, da die Anbindung der Zapfen an den Gelenkgabelhälften eine Vielzahl von Bauelementen erfordert, welche die beschriebenen Funktionen übernehmen. Aufgrund der erforderlichen Abstimmung der einzelnen Elemente zueinander ist die Schaffung einer derartigen Lageranordnung sehr kostenintensiv.

Der Erfindung liegt daher die Aufgabe zugrunde, eine Kreuzgelenkanordnung der eingangs genannten Art derart weiterzuentwickeln, daß die genannten Nachteile vermieden werden. Im einzelnen soll die Kreuzgelenkanordnung einen einfachen Aufbau sowie eine geringe Anzahl von Bauteilen aufweisen. Die Ausschaltung der negativen Einflüsse bei Verformung der drehmoment- übertragenden Bauteile auf die Lageranordnung, insbesondere das Axiallager, soll ohne Kenntnis der konkreten Verhältnisse des Einsatzfalles mit einer möglichst standardisierten Lösung ausgeschlossen werden können. Die vorgeschlagene Lösung soll sich dabei durch einen geringen konstruktiven fertigungstechnischen Aufwand sowie niedrige Kosten auszeichnen.

Die erfindungsgemäße Lösung ist durch die Merkmale der Ansprüche 1 und 2 charakterisiert. Vorteilhafte Ausgestaltungen sind jeweils in den Unteransprüchen beschrieben.

Eine Kreuzgelenkanordnung für den Einsatz in Gelenkwellen umfaßt wenigstens eine, aus zwei Gelenkgabelhälften, umfassend jeweils wenigstens einen Flanschteil und einen Lagerteil, bildbare Gelenkgabel. In der Gelenkgabel ist wenigstens eine Zapfenanordnung eines Zapfenkreuzes gelagert. Die Gelenkgabel bzw. jede der Gelenkgabelhälften weist dazu wenigstens eine Lagerbohrung auf, welche im Lagerteil der jeweiligen Gelenkgabelhälfte angeordnet ist, und eine Lageranordnung, die der Lagerbohrung zugeordnet ist. Die Lageranordnung selbst umfaßt wenigstens ein Axiallager. Erfindungsgemäß ist es vorgesehen, die Lagerbohrung der einzelnen Gelenkgabelhälfte als Blindbohrung auszuführen, d.h. die Gestaltung der Gelenkgabelhälfte erfolgt als geschlossene Ausführung bzw. mit einem formschlüssig gehaltenen Deckel. Die Anordnung des Axiallagers erfolgt im Bereich der Stirnseite des in der Gelenkgabel gelagerten Zapfens, d.h. in deren Nähe. Die Anordnung kann dabei außerhalb des Zapfens oder innerhalb der Zapfenbohrung erfolgen. Die Laufbahnen des Axiallagers sind im wesentlichen in Richtung der Zapfenachse der in der Gelenkgabel gelagerten Zapfenanordnung betrachtet drucksteif ausgeführt. Wenigstens eine der Laufbahnen des Axiallagers stützt sich wenigstens mittelbar an der Gelenkgabel oder dem in der Gelenkgabel gelagerten Zapfen des Zapfenkreuzes über entsprechende Mittel elastisch ab. Unter Zapfenachse wird dabei immer die Symmetrieachse der in einer Gelenkgabel gelagerten Zapfenanordnung verstanden. Jede Zapfenanordnung eines Zapfenkreuzes umfaßt zwei Zapfen, welche um 180° zueinander versetzt angeordnet sind, d.h. eine gemeinsame Symmetrieachse aufweisen und im Bereich der Zapfenwurzeln miteinander gekoppelt sind. Unter Gelenkachse wird die Achse verstanden, welche durch den Schnittpunkt der Zapfenachsen eines in der Gelenkgabel gelagerten Zapfenkreuzes verläuft und in der Regel mit der Rotationsachse der Gelenkgabel bzw. der Symmetrieachse des an die Gelenkgabel anschließenden antriebsseitigen oder abtriebsseitigen Bauelementes zusammenfällt.

Die Mittel umfassen wenigstens ein zwischen einer Laufbahn bzw. einem eine Laufbahn tragenden Element des Axiallagers und der Gelenkgabel oder dem Zapfen der in der Gelenkgabel gelagerten Zapfenanordnung angeordnetes Zwischenelement.

Die erfindungsgemäße Lösung ermöglicht es, daß unabhängig von der Größe der auftretenden Verformungen am Zapfenkreuz und den dieses umgebenden Bauelementen immer eine Planparallelität der einzelnen Laufbahnen des Axiallagers auf einfache Art und Weise verwirklicht wird, wobei gleichzeitig eine einfache Ausgestaltung der Lageranordnung in einer geschlossenen Gelenkgabelausführung realisiert wird. Diese Ausführung ist besonders für hohe Belastungen geeignet. Die Funktion, welche ansonsten von einem separaten Lagerdeckel, welcher dem Lagerteil und insbesondere der Lagerbohrung zugeordnet ist, übernommen wurde, wird jetzt von der Gelenkgabel selbst übernommen. Diese ist in der Regel als Vollgußbauteil ausgeführt und somit nicht durch die, die Lagerung aufnehmende Lagerbohrung geschwächt.

Des weiteren wird durch den Versatz des Axiallagers in den Bereich der Zapfen-Stirnseite des in der Gelenkgabel gelagerten Zapfens Bauraum für das Radiallager in axialer Richtung, d.h. in Richtung der Zapfenachse der in der Gelenkgabel gelagerten Zapfenanordnung gewonnen.

Für die konkrete Ausführung der elastischen Anbindung des Axiallagers an den Anschlußelementen, insbesondere in der Lagerbohrung der Gelenkgabel und am Zapfen des Zapfenkreuzes, bestehen eine Vielzahl von Möglichkeiten. Die konkrete Auswahl liegt jedoch im Ermessen des auf dem Gebiet der Konstruktion von derartigen Kreuzgelenkanordnungen tätigen Fachmannes. Die elastische Anbindung kann dabei durch die Kombinationen von Einzelelementen mit entsprechender Werkstoffauswahl zu einer baulichen Einheit eines zwischen dem Axiallager und dem entsprechenden Anschlußelement vorgesehenen Elementes erfolgen oder aber durch die geometrische Gestaltung des Zwischenelementes. Das Zwischenelement selbst kann dabei unabhängig von der Werkstoffauswahl
a) einteilig oder
b) mehrteilig
ausgeführt sein.

Bei mehrteiliger Ausführung besteht die Möglichkeit, die einzelnen Elemente miteinander zusätzlich form- und/oder kraftschlüssig zu koppeln. Bei der einteiligen Ausführung wird in der Regel der elastische Bereich durch entsprechende geometrische Gestaltung erzeugt. In diesem Fall ist das Zwischenelement in wenigstens drei Teilbereiche unterteilbar, einen ersten Teilbereich, einen zweiten Teilbereich und einen dritten Teilbereich, wobei der erste und der dritte Teilbereich wenigstens eine Laufbahn des Axiallagers bilden und sich an einem Anschlußelement abstützen. Der als Zwischenbereich ausgebildete zweite Teilbereich ist dazu in der Regel mit wenigstens einer starken Einschnürung versehen, welche bei einem Verkippen des Zapfens des in der Gelenkgabel gelagerten Zapfens einen Ausgleich der an und für sich daraus resultierenden Verkippung der Laufflächen des Axiallagers zueinander ermöglicht.

Im einfachsten Fall ist das Zwischenelement einteilig als sogenanntes deckelförmiges Element aus einem bestimmten Werkstoff ausgeführt, wobei das deckelförmige Element zusätzlich noch wenigstens einen Hohlraum umfaßt. Der Hohlraum kann sich dabei über den ersten Teilbereich bis in den dritten Teilbereich erstrecken. Die Einschnürung in Kombination mit den aus dem Hohlraum resultierenden dünnen Wänden des deckelförmigen Elementes übernimmt die Funktion des elastischen Teilbereiches. Bei mehrteiliger Ausführung besteht u.a. die Möglichkeit, das Zwischenelement als sphärisches Lager zu gestalten, welches wenigstens zwei Lagerschalen umfaßt, die eine Relativbewegung des Zapfenkreuzes gegenüber der Gelenkgabel durch Relativbewegung zueinander ausgleichen können.

Für die Anordnung des Axiallagers selbst bestehen ebenfalls eine Mehrzahl von Möglichkeiten, dieses ist jedoch immer im Bereich der Stirnfläche des in der Gelenkgabel gelagerten Zapfens des Zapfenkreuzes angeordnet. Die konkrete Anordnung kann
a) außerhalb des Zapfens des in der Gelenkgabel gelagerten Zapfenkreuzes in der Lagerbohrung, d.h. ausgehend von der Gelenkachse oberhalb der Stirnseite des Zapfens oder
b) innnerhalb einer sich von der Stirnseite des in der Gelenkgabelhälfte gelagerten Zapfens zur Gelenkachse G hin erstreckenden Zapfenbohrung oder
c) direkt in Höhe der Stirnseite des in der Gelenkgabel gelagerten Zapfens angeordnet werden.

Je nach Auswahl der Anordnungsmöglichkeit des Axiallagers in oder außerhalb der Zapfenbohrung erfolgt die Zwischenschaltung des Zwischenelementes mit dem elastischen Teilbereich zum Ausgleich der Relativbewegung zwischen dem Zapfenkreuz unter dem Einfluß der Umfangskraft und der Gelenkgabel. Vorzugsweise erfolgt bei Anordnung des Axiallagers in der Zapfenbohrung eine direkte Abstützung der inneren Lauffläche des Axiallagers an der von der Gelenkachse G wegweisenden Fläche der Zapfenbohrung. Die äußere Lauffläche stützt sich dann über das Zwischenelement elastisch an der Gelenkgabel ab. Das Zwischenelement ist in Einbaulage betrachtet somit von der Gelenkachse G ausgehend in Richtung der Zapfenachse oberhalb des Axiallagers angeordnet. Im anderen Fall, d.h. bei Anordnung des Axiallagers außerhalb der Zapfenbohrung, erfolgt vorzugsweise die elastische Anbindung über das Zwischenelement am Zapfen des Zapfenkreuzes, wobei das Zwischenelement sich in der Zapfenbohrung an dem in der Gelenkgabel gelagerten Zapfen abstützt. Für beide Ausführungen können die gleichen Elemente, jedoch mit Vertauschung der Funktionen, bezogen auf die Teilbereiche verwendet werden. Für das Axiallager selbst besteht die Möglichkeit, die Axiallager-Laufbahnen von separaten Bauelementen zu bilden, beispielsweise von ringförmigen Laufringen, welche sich an den Anschlußelementen bzw. dem Zwischenelement abstützen, oder aber diese durch entsprechende Bearbeitung an den Anschlußelementen, Gelenkgabel oder Zapfen bzw. Zapfenbohrung und Zwischenelement direkt auszubilden. Vorzugsweise wird, wenigstens eine Lauffläche am Anschlußelement direkt ausgebildet, da diese Lösung ein optimales Verhältnis bezüglich Bauraumbedarf der Lageranordnung und der übertragbaren Kräfte ermöglicht.

Die erfindungsgemäße Lösung wird nachfolgend anhand von Figuren erläutert. Darin ist im einzelnen folgendes dargestellt:
- Figur 1a: verdeutlicht schematisch in vereinfachter Darstellung eine erfindungsgemäße Ausführung einer Zapfenlageranordnung für eine Kreuzgelenkanordnung in Einbaulage in einer Schnittdarstellung durch ein Zapfenkreuz;
- Figur 1b: verdeutlicht in schematisch stark vereinfachter Darstellung die unter Belastung auftretenden Verformungen an den einzelnen Elementen der Kreuzgelenkanordnung gemäß Figur 1;
- Figur 2: verdeutlicht eine Ausführung gemäß Figur 1a mit einer Weiterbildung der Radiallageranordnung;
- Figur 3: verdeutlicht eine Ausführung gemäß der Figur 1a mit einer Radiallagerausführung ohne separaten Innenring;
- Figur 4: verdeutlicht schematisch in vereinfachter Darstellung eine erfindungsgemäße Ausführung einer Zapfenlageranordnung für eine Kreuzgelenkanordnung in Einbaulage in einer Schnittdarstellung durch ein Zapfenkreuz in einer durch die Zapfenachse und die Gelenkachse beschreibbaren Ebene in einer Ansicht auf eine in der Gelenkgabel gelagerte Zapfenanordnung mit Anordnung des Axiallagers innerhalb der Zapfenbohrung;
- Figur 5: verdeutlicht eine Ausführung gemäß Figur 4 mit Ausgestaltung des Zwischenelementes in Form eines sphärischen Lagers.

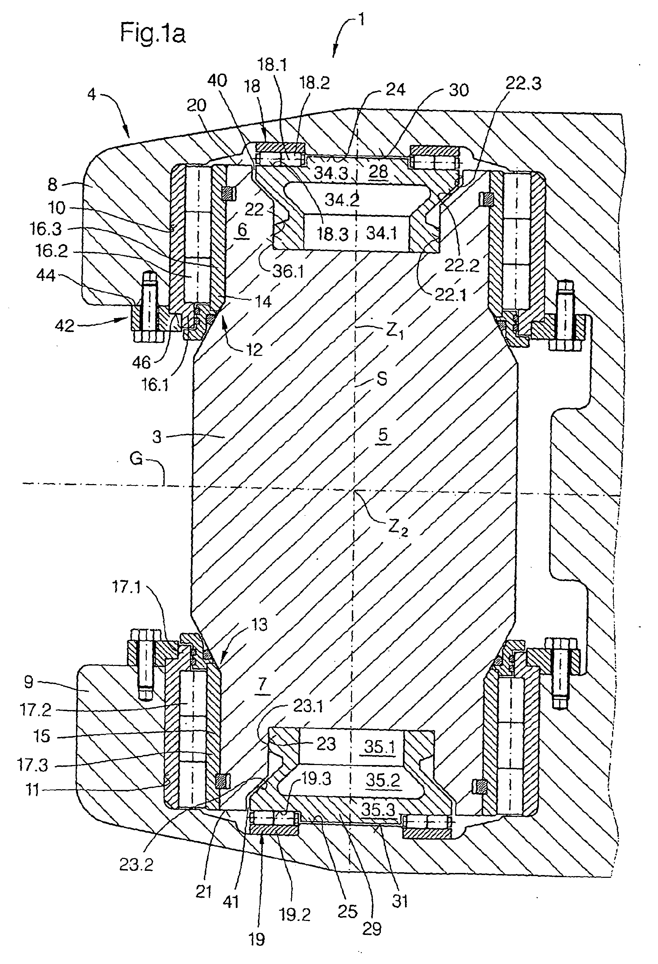

Die Figur 1a verdeutlicht schematisch in vereinfachter Darstellung die konstruktive Gestaltung einer erfindungsgemäße Ausführung einer Zapfenlageranordnung 1 für eine Kreuzgelenkanordnung 2 in Einbaulage in einer Schnittdarstellung durch ein Zapfenkreuz 3 in einer durch die Zapfenachse Z1 und die Gelenkachse G beschreibbaren Ebene in einer Ansicht auf eine in einer Gelenkgabel 4 gelagerte Zapfenanordnung 5 eines Zapfenkreuzes. In dieser Figur sind zur Veranschaulichung lediglich die beiden Zapfen 6 und 7 der Zapfenanordnung 5 dargestellt, welche in der Gelenkgabel 4 gelagert sind. Die Zapfen einer Zapfenanordnung, hier die Zapfen 6 und 7 der Zapfenanordnung 5 weisen dabei die gleiche Symmetrieachse S auf, welche im dargestellten Fall der Zapfenachse Z1 entspricht. Die Gelenkgabel 4 umfaßt zwei Gelenkgabelhälften, eine erste Gelenkgabelhälfte 8 und eine zweite Gelenkgabelhälfte 9. Die beiden Gelenkgabelhälften 8 und 9 als bauliche Einheit fungieren als Flanschmitnehmer für einen mit der Gelenkgabel 4 koppelbaren Wellenstrang, welcher antriebsseitig oder abtriebsseitig in einem Antriebsstrang angeordnet sein kann. Die Kopplung zwischen dem an die Gelenkgabel 4 anschließenden Wellenstrang erfolgt dabei kraft- und/oder formschlüssig. Zusätzlich können Mittel vorgesehen werden, welche eine Zentrierung der Lage der beiden Gelenkgabelhälften 8 und 9 zueinander in Einbaulage des Wellenstranges betrachtet in axialer Richtung und gleichzeitig oder zusätzlich in beliebiger Richtung zur Gelenkachse G ermöglichen. Die entsprechende Kopplung der beiden Gelenkgabelhälften 8 und 9 miteinander zur Vermeidung einer zu stark wechselnden Beanspruchung der in Richtung der Gelenkachse G ausgerichteten und wirkenden Verbindungselemente während des Betriebes, d.h. der Drehmomentenübertragung über die Kreuzgelenkanordnung, kann vielgestaltig ausgeführt sein. Denkbar sind auch hier Verbindungen, welche eine formschlüssige und/oder kraftschlüssige Kopplung der beiden Gelenkgabelhälften 8 und 9 in einer Richtung im wesentlichen parallel zur Gelenkachse G zueinander und/oder einer Richtung in einem Winkel zur Gelenkachse G ermöglichen.

Das Zapfenkreuz 3 ist mit seiner Zapfenanordnung 5, insbesondere den Zapfen 6 und 7 in der Gelenkgabel 4 im Bereich von deren Lagerbohrungen 10 bzw. 11 mittels jeweils einer Lageranordnung 12 bzw. 13 gelagert. Über die Lagerbohrung 10 bzw. 11 stützen sich die Zapfen 6 bzw. 7 eines Zapfenkreuzes wenigstens mittelbar an den Gelenkgabelhälften 8 bzw. 9 ab. Die zu den in der Gelenkgabel 4 gelagerten weiteren Zapfen des Zapfenkreuzes 3 um jeweils 90° zu den Zapfen 6 und 7 angeordneten Zapfen sind in einer weiteren hier nicht im einzelnen dargestellten Gelenkgabel, umfassend ebenfalls zwei Gelenkgabelhälften, im Bereich von deren Lagerbohrungen mittels ebenfalls jeweils einer Lageranordnung gelagert. Die hier nicht dargestellte Gelenkgabel für die weiteren Zapfen des Zapfenkreuzes 3 sind dann mit einem Maschinenteil je nach Kopplung der Zapfen 6 und 7 mit einem antriebsseitigen oder abtriebsseitigen Bauelement mit einem abtriebsseitigen bzw. antriebsseitigen Bauelement gekoppelt. Die Zapfenachsen der einzelnen Zapfen des Zapfenkreuzes 3, unter denen jeweils die Achsen durch die Zapfen 6 und 7 und die hier nicht dargestellten, um 90° zu diesen Zapfen versetzt angeordneten Zapfen, verstanden werden, können dabei in einer Ebene oder in zwei zueinander in Einbaulage in axialer Richtung parallel versetzten Ebenen der miteinander zu koppelnden antriebsseitigen und abtriebsseitigen Elemente betrachtet, angeordnet werden. Die Lageranordnung 12 bzw. 13 umfaßt jeweils ein Radiallager 14 bzw. 15 mit jeweils einem Außenring 16.1 bzw. 17.1, den Wälzelementen 16.2 bzw. 17.2 und dem Innenring 16.3 bzw. 17.3, sowie ein Axiallager 18 bzw. 19. Die Lageranordnung 12 umfaßt dabei das Radiallager 14 und das Axiallager 18, während die Lageranordnung 13 das Radiallager 15 und das Axiallager 19 umfaßt. Erfindungsgemäß weisen die Gelenkgabelhälften 8 und 9 lediglich eine Lagerbohrung 10 bzw. 11 in Form einer sogenannten Blindbohrung auf.

Dies bedeutet, daß in Einbaulage des Zapfenkreuzes 3, insbesondere in Richtung der Zapfenachse Z1 der Zapfen 6 und 7, betrachtet, die Ausführung der Gelenkgabelhälfte geschlossen erfolgt. Diese umschließt sozusagen den in der Gelenkgabel gelagerten Zapfen. Ein separater Lagerdeckel entfällt, diese Funktion wird durch die geschlossene Ausführung der Gelenkgabelhälfte 8 bzw. 9 mitübernommen.

Das Axiallager 18 bzw. 19 ist im Bereich der von der Gelenkachse G weg weisenden Stirnseite 20 bzw. 21 des Zapfens 6 bzw. 7 angeordnet. Dabei kann das Axiallager 18 bzw. 19 in einer im Bereich der Stirnseite 20 bzw. 21 der Zapfen 6 bzw. 7 angeordneten Zapfenbohrung 22 bzw. 23 angeordnet werden. Die Zapfenbohrungen 22, 23 erstrecken sich jeweils von der Stirnseite 20 bzw. 21 in Richtung der Zapfenachse Z1 und weisen eine Symmetrieachse auf, welche mit der Zapfenachse zusammenfällt. Das Axiallager 18 bzw. 19 umfaßt wenigstens die Wälzelemente 18.1 bzw. 19.1. Die Wälzelemente 18.1 bzw. 19.1 stützen sich jeweils an einer zur Gelenkachse G, unter welcher die Achse durch den in eine Ebene gelegten Schnittpunkt der Zapfenachsen Z1 und Z2 zu verstehen ist, gerichteten Stirnfläche 24 bzw. 25, welche durch die als Blindbohrung 10 bzw. 11 ausgeführten Lagerbohrungen in der Gelenkgabelhälfte 8 bzw. 9 gebildet wird, wenigstens mittelbar ab. Dies bedeutet, daß entweder die zur Gelenkachse G gerichtete Stirnfläche der Lagerbohrung 10 bzw. 11 direkt eine Lauffläche für die Wälzelemente 18.1 bzw. 19.1 bildet, oder zwischen den Wälzelementen 18.1 bzw. 19.1 des Axiallagers 18 bzw. 19 ein separates, eine erste Lauffläche bildendes, ringförmiges Element 18.2 bzw. 19.2 vorgesehen werden kann, welches den Außenring des Axiallagers in Einbaulage von der Gelenkachse G ausgehend betrachtet, bildet. Die zweite in axialer Richtung von der Gelenkachse G ausgehend in Einbaulage betrachtet in Richtung der Zapfenachse Z1 innenliegende Lauffläche 18.3 bzw. 19.3 wird von einem Element 28 bzw. 29 gebildet. Dieses Element ist deckelförmig gestaltet und weist in axialer Richtung bezogen auf die Zapfenachse Z1 betrachtet, ausgehend von der Gelenkgabelachse G, an ihrer von der Gelenkgabelachse G weggerichteten Stirnseite 30 bzw. 31 einen dritten Teilbereich 34.3 bzw. 35.3 auf, welcher vorzugsweise im Bereich des Außenumfanges des deckelförmigen Elementes 28 bzw. 29 vorgesehen ist, und welcher die Lauffläche für die Wälzelemente 18.1 bzw. 19.1 bildet. Das deckelförmige Element 28 weist dabei insgesamt wenigstens drei Bereiche auf, einen ersten Teilbereich 34.1 bzw. 35.1, einen zweiten Teilbereich 34.2 bzw. 35.2 und einen dritten Teilbereich 34.3 bzw. 35.3. Vorzugsweise bilden diese drei Teilbereiche eine bauliche Einheit. Es besteht jedoch auch theoretisch die in dieser Figur nicht dargestellte Möglichkeit, diese Elemente als separate Elemente auszuführen, wobei untereinander zur Bildung des deckelförmigen Elementes 28 bzw. 29 eine Koppelung form- und/oder kraftschlüssig vorgesehen werden kann, jedoch nicht muß. Der erste Teilbereich 34.1 bzw. 35.1 ist dabei in der Zapfenbohrung 22 bzw. 23 angeordnet, wobei eine Kopplung mit dem Zapfenkreuz 3 über eine entsprechende Preßpassung realisiert wird. Dies bedeutet, daß der Außenumfang 36.1 im ersten Teilbereich 34.1 und die Abmessungen der Zapfenbohrung 22 für diesen Teilbereich, insbesondere deren Durchmesser mit der entsprechenden Toleranz für die Gestaltung eines Preßsitzes ausgeführt sind. Eine Bewegbarkeit des deckelförmigen Elementes 28 gegenüber der Zapfenbohrung 22 in axialer Richtung, d.h. in Richtung parallel zur Zapfenachse Z1, wird dabei vermieden. Die beiden Teilbereiche, erster Teilbereich 34.1 und dritter Teilbereich 34.3 sind drucksteif ausgeführt. Dies ist neben der Realisierung des Preßsitzes im Bereich des ersten Teilelementes 34.1 auch für den dritten Teilbereich 34.3 bzw. 35.3 erforderlich, um immer eine Planparallelität der Laufflächen 32 bzw. 33 für die Wälzelemente 18.1 bzw. 19.1 zu erhalten. Die hier getätigten Aussagen für die Lageranordnung 12 gelten in Analogie auch für die Elemente der Lageranordnung 13. Die Lageranordnungen 12, 13 der Gelenkwellen werden beim Antrieb von beispielsweise schweren Walzwerksantrieben durch hohe Drehmomentstöße und das gleichzeitige Auftreten von Querbeschleunigungen hoch beansprucht, die dabei auftretenden stoßartigen Belastungen bei großen und sich rasch ändernden Beugewinkeln verursachen elastische Verformungen der Gelenkgabel sowohl im Bereich der Flansche als auch innerhalb des Gabelauges, d.h. der Lagerbohrungen 10, 11. Die Bohrung weitet sich und nimmt dabei unrunde Formen an.

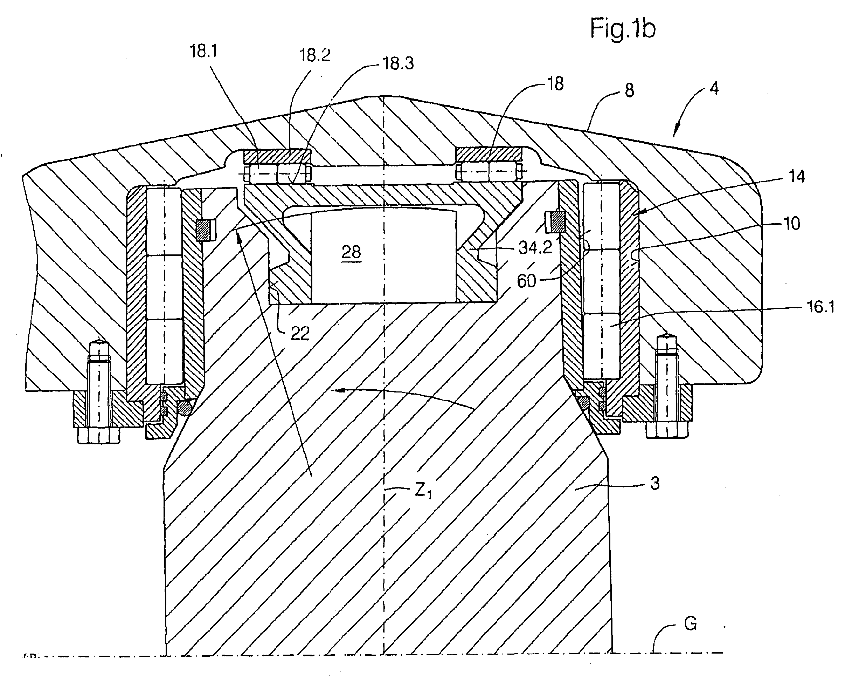

Da die Verformung der drehmomentübertragenden Bauteile des Kreuzzapfengelenkes dabei in Umfangsrichtung der Kraft am größten ist, kann es in der Lagerung zu einer ungleichmäßigen Lastverteilung kommen und es wird somit nur noch ein Bruchteil der möglichen Tragzahl genutzt, wobei insbesondere die daraus resultierende fehlende Planparallelität der Axiallagerlaufbahnen eine vorzeitige Ermüdung der Laufbahnen und der Wälzkörper sowie eine möglicherweise zusätzliche plastische Verformung mit ihren Folgen wie Pittings oder ähnliches bewirken kann, sind Mittel zum Ausgleich der Verformung bei Drehmomentbelastung vorgesehen. Diese sind in der Figur 1 in Form eines biegeweich gestalteten zweiten Teilbereiches 34.2 bzw. 35.2 des deckelförmigen Elementes 28 bzw. 29, welcher zwischen dem ersten und dem dritten Teilbereich des deckelförmigen Elementes angeordnet ist, ausgeführt. Die Ausführung als biegeweiches Zwischenstück ermöglicht die Übernahme der Funktion einer Federeinheit zwischen den beiden Teilbereichen 34.1 bzw. 35.1 und 34.3 bzw. 35.3.

Bezüglich der Ausgestaltung des elastischen zweiten Bereiches bestehen eine Vielzahl von Möglichkeiten. Vorzugsweise wird das deckelförmige Element 28 bzw. 29 als Baueinheit ausgeführt, wobei der elastische Bereich durch entsprechende Gestaltung, insbesondere das Vorsehen von Einschnürungen in radialer Richtung bezogen auf die Zapfenachse Z1 betrachtet im zweiten Teilbereich 34.2 bzw. 35.2, erfolgt. Der dritte Teilbereich 34.3 bzw. 35.3 ist erfindungsgemäß derart gestaltet, daß dieser eine im wesentlichen zur Zapfenbohrung 22, 23 komplementäre Ausgestaltung aufweist, jedoch mit geringeren Abmessungen, so daß zwischen der Zapfenbohrung 22 bzw. 23 und dem dritten Teilbereich 34.3 bzw. 35.3 ein schmaler Spalt besteht. Dieser ist hier mit 40 bzw. 41 bezeichnet und zum Ausgleich der Verformungen bei Drehmomentenübertragung bei Verformung des elastischen Bereiches 34.2 bzw. 35.2 erforderlich.

Die Zapfenbohrung 22 bzw. 23 ist zu diesem Zweck ebenfalls vorzugsweise in wenigstens zwei Bereiche unterschiedlichen Durchmessers unterteilt - in einen ersten Teilbereich 22.1 bzw. 23.1 und einen zweiten Teilbereich 22.2 bzw. 23.2 -, wobei der zweite Teilbereich 22.2 bzw. 23.2 hier durch eine stetige Änderung des Durchmessers d charakterisiert ist. Die Durchmesseränderung ist dabei durch eine Zunahme von erstem Teilbereich 22.1 in Richtung der Stirnseite 20 des Zapfens 6 charakterisiert.

Die durch die Querbeschleunigung entstehenden Axialkräfte, die in Richtung der Zapfenachse Z1 von der Gelenkachse G weg, hier beispielsweise in Richtung der Gelenkgabelhälfte 8, wirken, führen zu einer Belastung des in dieser Richtung liegenden Axiallagers 18 und zu einer Endlastung des in Zapfenachsrichtung entgegen der Wirkungsrichtung der Axialkräfte auf der Seite der Gelenkgabelhälfte 9 liegenden Axiallagers 19. Das entlastete Lager kann in diesem Betriebszustand als passives Lager und das belastete als aktives Lager bezeichnet werden. In dieser Ausführung bewirkt eine in Richtung der Zapfenachse Z1 von der Gelenkachse G wegwirkende Axialkraft eine Beanspruchung des axialen Sicherungselementes 32 für den Innenring 16.3 des Radiallagers 14 und damit eine axiale Verschiebung des Innenringes 16.3 des Radiallagers 14, wodurch über die Kopplung des deckelförmigen Elementes 28 mit dem Zapfen 6 das Axiallager 18 belastet wird und die Kräfte sowohl über den Preßsitz zwischen dem ersten Teilbereich 34.1 und dem ersten Teilbereich der Zapfenbohrung 22.1 sowie dem dritten Teilbereich 34.3 in das Axiallager 18 eingeleitet werden. Über die Wälzelemente 18.1 werden die Kräfte auf den Außenring 18.2 und damit die Gelenkgabelhälfte 8 übertragen. Es erfolgt somit immer eine Kraftübertragung über das in Kraftrichtung liegende Axiallager.

Zur Fixierung der Lage des Außenringes 16.1 des Radiallagers 16 in axialer Richtung kann diesem ein Anschlag in der Lagerbohrung 10 zugeordnet sein. Der Anschlag wird dabei von der zur Gelenkachse G hin ausgerichteten Stirnseite 24 der Lagerbohrung 10 gebildet. Zur Fixierung gegenüber der Gelenkachse G ist dem Außenring des Radiallagers wenigstens ein durch eine ringförmige Fläche beschreibbarer Anschlag 42 zugeordnet, welcher mit der Gelenkgabelhälfte 8 verschraubbar ist und mit seiner zum Außenring 16.1 des Radiallagers 14 hinweisenden Fläche 44 einen Anschlag für wenigstens einen Teil der zur Gelenkachse G hinweisenden Stirnfläche 46 des Außenringes 16.1 des Radiallagers 14 bildet.

In der Figur 1b sind die Verhältnisse beim Auftreten stoßartiger Belastungen bei großen und sich rasch verändernden Beugewinkeln an der Gelenkgabel 4, beispielhaft hier für die Gelenkgabelhälfte 8 wiedergegeben, dargestellt, wobei aus Vereinfachungsgründen auf den Innenring 16.3 des Radiallagers 14 verzichtet wurde. Die größte Verformung am Zapfenkreuz 3 wird dabei durch Einleitung der Umfangskraft verursacht. Ihre Richtung oszilliert mit einem positiven oder negativen Wert des Betriebebeugewinkels und wechselt außerdem mit jedem Reversiervorgang um 180°. Diese betriebs- und konstruktionsbedingte Einflüsse ergeben Fluchtungsfehler mit einer ungünstigen Lasteinleitung in die Lager, nämlich Mittenversatz der Lagerbohrung 10, Schrägstellung der Lagerbohrung 10, Durchbiegung des Zapfens 6 sowie Radialspiel in den Wälzlagerungen, insbesondere am Radiallager 14 und Einfederung des Wälzlagers. Infolgedessen kommt es zu einer ungleichmäßigen radialen Druckverteilung in der Lagerbohrung 10 und führt von einer Linien- zur Punktberührung an den Kontaktstellen der Wälzkörper 16.2 und zu überhöhten Kantenspannungen. Ohne das erfindungsgemäße Vorsehen des deckelförmigen Elementes 28 mit zweitem elastischen Teilbereich 34.2 käme es zu einem Verkippen der Laufflächen 18.2 und 18.3 des Axiallagers 18 gegeneinander. Die Planparallelität der Laufflächen wäre somit unter Belastung nicht mehr gewährleistet. Das Abheben der Wälzelemente 18.1 bzw. die nur noch bestehende Punktberührung würde zu einer drastischen Tragzahlminderung führen. Durch die erfindungsgemäße elastische Anbindung des Axiallagers 18 können jedoch die Einflüsse der Verformung des Zapfens 6 auf die einzelnen Elemente des Axiallagers 18 ausgeschalten werden. Nicht maßstabsgerecht zur Verdeutlichung wird aus dieser Figur ersichtlich, wie sich die Verhältnisse am Radiallager 14 darstellen, nämlich ein Abheben der Wälzelemente 16.2 von der Außenfläche 60 des Zapfens 6, welche die Lauffläche für das Radiallager 14 bildet. Unberührt von der durch die Verformungen am Zapfenkreuz 3 hervorgerufene Neigung der Stirnseite 20 des Zapfens bleibt das deckelförmige Element mit seinem dritten Teilbereich 34.3, welches im Bereich seines Außenumfanges bezogen auf die Zapfenachse Z1 die Wälzelemente des Axiallagers 18 trägt. Der Ausgleich erfolgt über den elastischen Teilbereich 34.2. Dieser ermöglicht es, daß der erste Teilbereich des deckelförmigen Elementes 34.1, welcher mit der Zapfenbohrung 22 verspannt ist, ebenfalls mit der Zapfenbohrung verkippt werden kann, ohne daß diese Verkippung aufgrund der Kopplung zwischen dem ersten Teilbereich 34.1 und dem dritten Teilbereich 34.3 zu einer Zwangsmitführung des dritten Teilbereiches 34.3 führt. Das Verkippen des ersten Teilbereiches 34.1 wird somit über den zweiten Teilbereich 34.2 ausgeglichen. Für das Axiallager 18 wird somit eine steife Anbindung an der Gelenkgabelhälfte 8 realisiert.

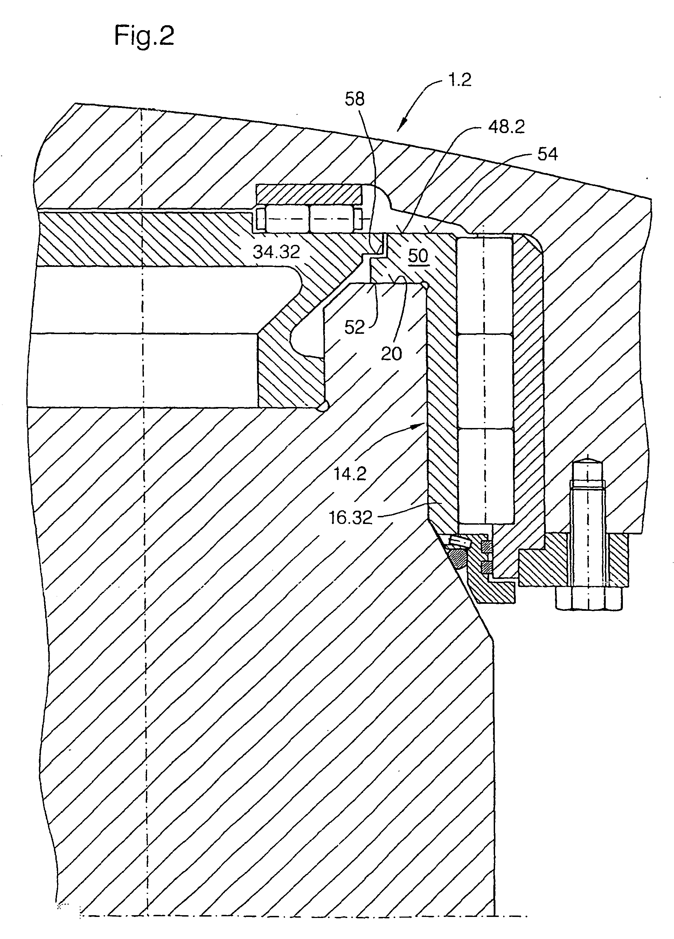

Die Figur 2 verdeutlicht eine weitere Ausführung einer erfindungsgemäß gestalteten Zapfenlageranordnung 1.2 einer Kreuzgelenkanordnung 2.2, wobei diese im wesentlichen hinsichtlich ihres Grundaufbaus und der Wirkungsweise der in der Figur 1 beschriebenen entspricht. Für gleiche Elemente werden dabei die gleichen Bezugszeichen verwendet. Der wesentliche Unterschied gegenüber der in der Figur 1 dargestellten Ausführung besteht darin, daß die axiale Sicherung des Innenringes 16.32 des Radiallagers 16 auf andere Art und Weise gelöst wird. In der dargestellten Ausführung weist der Innenring 16.32 des Radiallagers 14 im Bereich seiner von der Gelenkachse G weggerichteten Stirnseite 48.2 einen gegen die Zapfenachse gerichteten Bund 50 auf. Der Bund 50 erstreckt sich dabei vorzugsweise senkrecht zur Zapfenachse Z1 in radialer Richtung bezogen auf diese und weist einen geringeren Durchmesser als der Bereich des Innenringes 16.32 auf, welcher am Außenumfang des Zapfens 6 des Zapfenkreuzes zum Anliegen kommt. Der Bund 50 bildet dabei mit seiner zur Gelenkachse G hingerichteten Stirnfläche 52 eine Anschlagsfläche, welche mit der von der Gelenkachse G weggerichteten Stirnfläche 20 des Zapfens 6 in Wirkverbindung tritt. Des weiteren weist der Bund 50 im Bereich seiner von der Gelenkachse G weggerichteten Stirnseite 54 eine Anschlagsfläche 58 auf, an welcher das dritte Teilelement 34.32 in axialer Richtung zum Anliegen kommt. Die axiale Fixierung des Innenringes 16.32 des Radiallagers erfolgt hierbei über die konstruktive Gestaltung des Innenringes des Radiallagers.

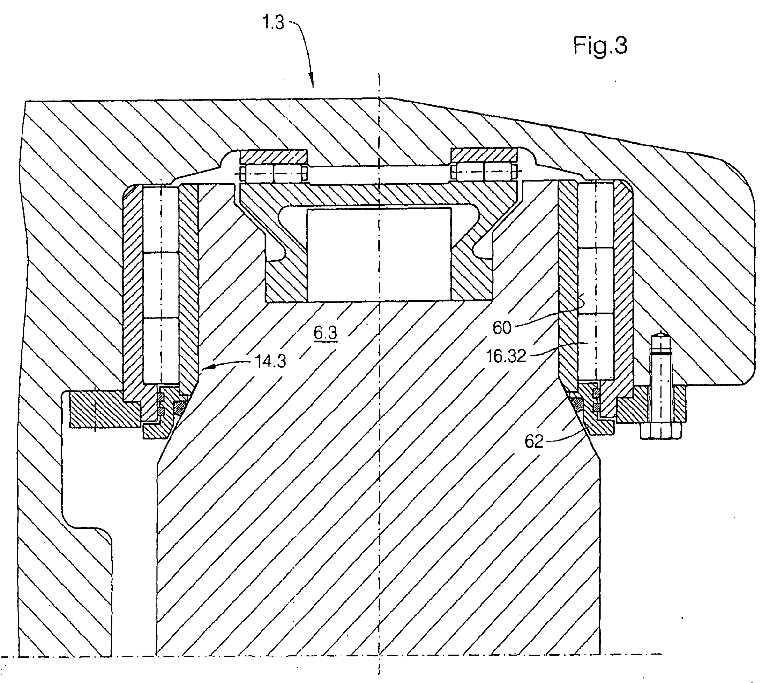

Eine besonders kompakte Ausführungform der erfindungsgemäßen Lösung ist in der Figur 3 dargestellt, die Funktionsweise und der Grundaufbau entsprechen dabei im wesentlichen dem in der Figur 1 beschriebenen. Vorzugsweise ist das Radiallager 14 frei von einem separaten Radiallagerinnenring. Die Lauffläche für die Wälzkörper 16.23 des Radiallagers 14.3 werden dabei von der Außenfläche 60 des Zapfens 6.3 des Zapfenkreuzes 3 gebildet. Der die Lauffläche für die Wälzelemente 16.23 bildende Bereich des Zapfens 6.3 ist zu diesem Zweck vorzugsweise gehärtet ausgeführt. In Analogie gilt diese Aussage auch für eine zwischen den Wälzelementen und der Zapfenwurzel angeordnete Dichtungshaltevorrichtung 62. Diese ist ebenfalls dem Außendurchmesser des Zapfens 6.3 im Bereich der Zapfenwurzel zugeordnet.

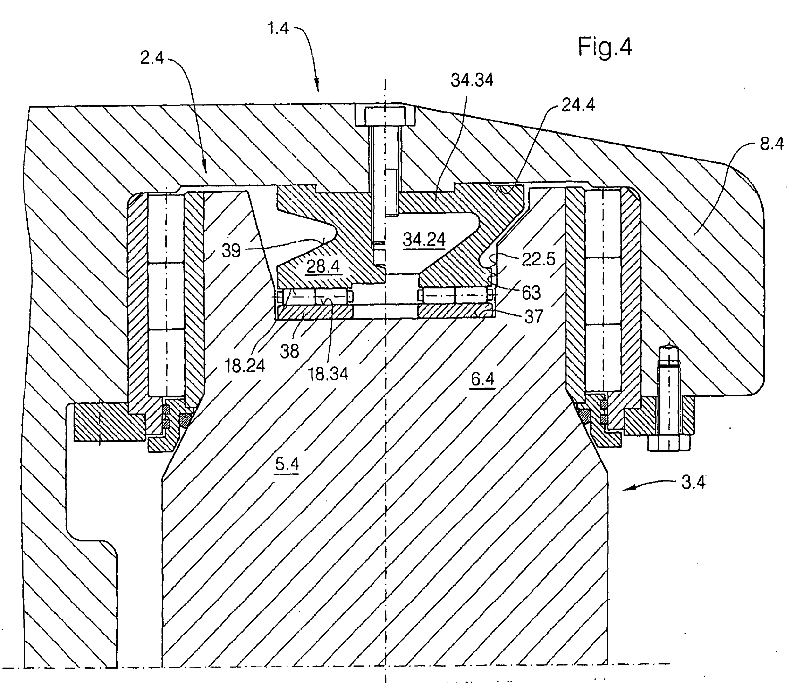

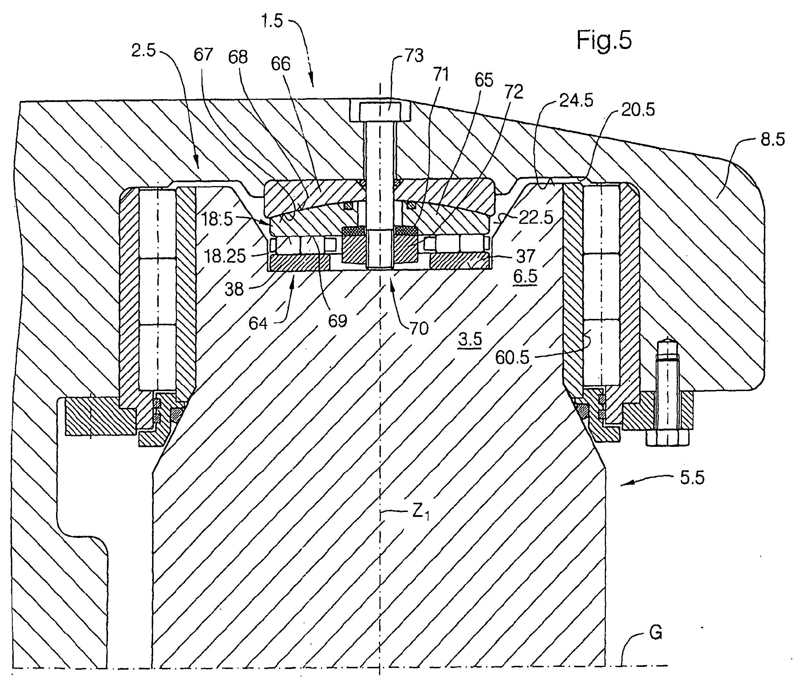

Die Figuren 1 bis 3 verdeutlichen Ausführungen mit einer Anordnung des Axiallagers im Bereich der Stirnseite des Zapfens und eine Integration eines biegeelastischen Elementes im Bereich der Zapfenbohrung. Demgegenüber verdeutlicht die in den Figuren 4 und 5 dargestellte Ausführung eine Weiterentwicklung, welche das in den Figuren 1 bis 3 beschriebene Grundprinzip verwirklicht, jedoch die Anordnung zwischen Gelenkgabel, Axiallager und deckelförmigen Element bzw. biegeelastisch gestaltetem Bereich, vertauscht. In diesem Fall wird das Axiallager in die Zapfenbohrung hineinversetzt und das biegeelastische Element bzw. das Federelement zwischen die zur Gelenkachse G hingerichtete Stirnfläche der Lagerbohrung und dem Axiallager angeordnet.

Die Laufbahnen des Axiallagers 18, 19 können dabei entweder direkt von den Anschlußelementen Gelenkgabelhälfte und/oder deckelförmigen Element 28, 29 und/oder Zapfen 6, 7 gebildet werden. Es besteht jedoch auch die Möglichkeit, die Laufbahnen von separaten Elementen zu bilden, welche sich an den den Anschlußelementen abstützen. Diese Ausführung wird immer dann sinnvoll sein, wenn standardisierte und vorgefertigte Lager, insbesondere Wälzlager zum Einsatz gelangen.

Die Figur 4 verdeutlicht eine weitere Ausführung einer Zapfenlageranordnung 1.4 für eine Kreuzgelenkanordnung 2.4 in Einbaulage in einer Schnittdarstellung durch ein Zapfenkreuz 3.4 in einer durch die Zapfenachse Z1 und die Gelenkachse G beschreibbaren Ebene in einer Ansicht auf eine, in einer Gelenkgabel 4.4 gelagerte Zapfenanordnung 5.4 eines Zapfenkreuzes 3.4, beispielhaft für den in der Gelenkgabelhälfte 8.4 gelagerten Zapfen 6.4. Der Grundaufbau unterscheidet sich nur unmerklich von den in den Figuren 1 bis 3 beschriebenen, weshalb für gleiche Elemente die gleichen Bezugszeichen verwendet werden. Im dargestellten Fall ist das Axiallager 18.4 nicht im Bereich der Stirnseite 20.4 des Zapfens 6.4 angeordnet, sondern in die Zapfenbohrung 22.4 hineinversetzt. An der von der Gelenkachse G weggerichteten Fläche 37 der Zapfenbohrung 22.4 stützt sich das die, in axialer Richtung von der Gelenkachse G betrachtet, innere Lauffläche 18.3 tragende Element 38 ab. Die in axialer Richtung von der Gelenkachse G ausgehend betrachtete äußere Lauffläche 18.24 des Axiallagers 18.4 wird im dargestellten Fall von einem deckelförmig gestalteten Element 28.4 gebildet. Es besteht jedoch auch die hier nicht dargestellte Möglichkeit, die Lauffläche von einem separaten Element zu bilden, welche sich über das deckelförmige Element 28.4 an der zur Gelenkachse G hinweisenden Stirnfläche 24.4 abstützt. Das deckelförmige Element 28.4 weist zu diesem Zweck auch hier drei Teilbereiche auf, einen ersten Teilbereich 34.14, einen zweiten Teilbereich 34.24 und einen dritten Teilbereich 34.34. Die äußere Lauffläche des Axiallagers 18.4 wird dabei vom dritten Teilbereich 34.34 gebildet. Der erste Teilbereich stützt sich an der zur Gelenkgabelachse G hingerichteten Stirnfläche 24.4 der Lagerbohrung 10.4 ab. Auch hier erfolgt die Ausbildung des elastischen Bereiches 34.24 durch dessen geometrische Gestaltung. Im einzelnen wird dazu auf die in der Figur dargestellten Einschnürungen 39 und 40 verwiesen. In der Fig. 4 sind aus Vereinfachungsgründen zwei Möglichkeiten zur Gestaltung des deckelförmigen Elementes 28.4 und der dazu auszubildenden Zapfenbohrung 22.4 in einer Kreuzgelenkanordnung jeweils einseitig zur Symmetrieachse der in der Gelenkgabel gelagerten Zapfenanordnung 5.4 verdeutlicht. D.h. jede der Möglichkeiten links oder rechts von der Zapfenachse Z1 ausgehend muß rotationssymmetrisch zu dieser Zapfenachse ausgeführt sein.

Auch hier sind der erste und der dritte Teilbereich des deckelförmigen Elementes 28.4 in Richtung der Zapfenachse Z1 betrachtet jeweils drucksteif ausgeführt. Die Ausgestaltung bezogen auf die Umfangsrichtung erfolgt dabei derart, daß bei Auftreten der Verformungen am Zapfenkreuz 3.4 bzw. der Gelenkgabel 4.4 immer eine starre Anbindung dieser Bereiche an die entsprechende Anschlußelemente gewährleistet ist.

Im dargestellten Fall links der Zapfenachse Z1 ist die Zapfenbohrung 22.4 in wenigstens zwei Teilbereiche unterschiedlichen Durchmessers unterteilbar, vorzugsweise werden jedoch wie rechts von der Zapfenachse Z1 dargestellt drei Teilbereiche gewählt, wobei die Abmessungen zwischen deckelförmigen Element 28.4 und Innenumfang 63 der Zapfenbohrung 22 derart gewählt sind, daß im unbelasteten Zustand ein geringes Spiel in radialer Richtung vorhanden ist. Lediglich das die innere Lauffläche 18.34 tragende Element 38 ist mit der Innenfläche 63 der Zapfenbohrung 22.4 verspannt, so daß keine Bewegung in axialer Richtung bezogen auf die Gelenkachse G in Richtung der Zapfenachse Z1 erfolgt. Die Auswahl der Werkstoffe für das die innere Lauffläche 18.34 tragende Element 38 und vorzugsweise den dritten Teilbereich 34.34 des deckelförmigen Elementes 28.4 erfolgt dabei derart, daß die durch diese Elemente beschriebenen Flächen in Richtung der Zapfenachse Z1 bzw. parallel zu dieser betrachtet eben ausgeführt und in dieser Richtung drucksteif sind. Eine Verformung dieser Elemente in Umfangsrichtung ist ebenfalls nicht erwünscht, diese Verformung wird über den elastischen Bereich 34.24 ausgeglichen. Die Wirkungsweise des zweiten Teilbereiches 34.24 kann dabei in Analogie zu der in der Figur 1b dargestellten Ausführung betrachtet werden. Bei den unter Einwirkung der Umfangskraft auftretenden Verformungen bleiben die beiden Laufflächen, innere Lauffläche 18.34 und äußere Lauffläche 18.24 parallel zueinander. Die Verformung zwischen dem Axiallager 18.4 und der Gelenkgabel 8.4 wird über den elastischen Bereich 34.24 ausgeglichen. Auch hier ist das deckelförmige Element 28.4 als einteiliges Bauelement ausgeführt, wobei die Funktion des elastischen Bereiches durch die geometrische Gestaltung im zweiten Teilbereich realisiert wird.

Die Figur 5 verdeutlicht eine weitere Ausführung einer Lageranordnung 1.5 für ein Zapfenkreuz 3.5 in schematisch vereinfachter Darstellung, wobei auch hier das Axiallager 18.5 in den Bereich der Zapfenbohrung 22.5 versetzt wurde. Der Grundaufbau der Lageranordnung entspricht im wesentlichen den in den Figuren 1 bis 4 beschriebenen, weshalb für gleiche Elemente die gleichen Bezugszeichen verwendet werden. Des weiteren wird nachfolgend auch nicht mehr auf die Ausgestaltung der Radiallagerung eingegangen, für diese bestehen eine Vielzahl von Möglichkeiten, wobei die in der Figur 5 dargestellte Ausführung des Radiallagers 14.5 nicht verbindlich ist. Auch hier besteht die Möglichkeit, das Radiallager mit einem separaten Außenring und Innenring zu versehen, oder wie hier dargestellt, die Laufflächen des Radiallagers von einem Anschlußelement direkt zu bilden, hier beispielsweise die innere Lauffläche des Radiallagers vom Außenumfang 60.5 des Zapfens 6.5. Zwischen dem Axiallager 18.5 und der zur Gelenkachse G hinweisenden Fläche 24.5 der Lagerbohrung 10.5 ist ein sphärisches Lager 64 vorgesehen. Das sphärische Lager 64 umfaßt wenigstens zwei Teilelemente, ein erstes Teilelement 65 und ein zweites Teilelement 66, welche jeweils als scheibenförmige Elemente mit zueinander komplementärer Ausformung der zueinanderweisenden Kontaktflächen 67 und 68 ausgeführt sind. Wenigstens die Kontaktflächen 67 und 68 sind mit einer entsprechenden Reibpaarung versehen, vorzugsweise Stahl/Stahl oder in Form einer Kunststoffbeschichtung. Dabei besteht die Möglichkeit, entweder die Teilelemente, erstes Teilelement 65 und zweites Teilelement 66, vollständig aus den entsprechenden Werkstoffen zu fertigen oder diese lediglich im Bereich ihrer Kontaktflächen zueinander mit einer entsprechenden Beschichtung zu versehen. Vorzugsweise sind die die Kontaktflächen bildenden Bereiche aus einem Werkstoff mit Einlagerungen gebildet, welcher den Eigenschaften für eine Notlaufschmierung recht werden. Bei Belastung werden die beiden scheibenförmige Elemente, welche auch als Lagerschalen bezeichnet werden, gegeneinander gedrückt, während bei Entlastung ein Spiel zwischen beiden besteht. Das sphärische Lager bildet im Bereich seiner zur Gelenkachse G in Einbaulage weisenden Fläche 69 die äußere Lauffläche 18.25 des Axiallagers 18.5. Denkbar ist es auch hier, noch ein weiteres Zwischenelement zwischen der zur Gelenkachse G weisenden Fläche 69 des sphärischen Lagers 64 und den Wälzelementen zur Bildung der äußeren Lauffläche 18.25 des Axiallagers 18.5 vorzusehen.

Um ein vollständiges Abheben des sphärischen Lagers bzw. der Lagerschale bei Entlastung des Axiallagers 18.5 zu verhindern, sind Mittel 70 vorgesehen. Diese umfassen wenigstens eine Druckscheibe 71 und eine Mutter 72, welche den zweiten Teilbereich 66 des sphärischen Lagers 64 hinsichtlich seiner Lage in axialer Richtung gegenüber der Gelenkachse G in Richtung der Zapfenachse Z1 fixiert. Die Mutter ist zu diesem Zweck auf ein bolzenartiges Element 73, welches wenigstens einen Gewindegang 74 trägt, aufgeschraubt. Das bolzenformige Element 73 stützt sich dabei an der Gelenkgabelhälfte 8.5 ab.

Bei Verkippen des Zapfens 6.5 in radialer Richtung werden die beiden Laufflächen des Axiallagers 18.5, die innere Lauffläche 18.35 und die äußere Lauffläche 18.25, durch das sphärische Lager 64, insbesondere die Relativbewegung zwischen dem zweiten Teilbereich 66 und dem ersten Teilbereich 65 des sphärischen Lagers, ausgeglichen.

Die in den Figuren 4 und 5 dargestellte Möglichkeit der elastischen Anbindung eines in die Zapfenbohrung hineinversetzten Axiallagers an der Gelenkgabel stellen lediglich mögliche Ausführungen dar und sind keinesfalls auf die in den Figuren dargestellten Möglichkeiten begrenzt. Entscheidend ist lediglich, wie auch für die Ausführungen der Figuren 1 bis 3, daß ein Ausgleichselement zwischen dem Axiallager und den Anschlußelementen in axialer Richtung bezogen auf die Gelenkachse G in Richtung der Zapfenachse vorgesehen wird. Dieses Ausgleichselement übernimmt die Funktion einer Federeinrichtung, wobei Verformungen durch elastische Verformungen am Ausgleichselement ausgeglichen werden.

Die konkrete Ausgestaltung der einzelnen Elemente, deckelförmiges Element oder sphärisches Lager, liegt dabei im Ermessen eines Fachmannes und hängt im einzelnen von den konkreten Einsatzerfordernissen, denen die Lageranordnung für eine Gelenkwelle während des Betriebes ausgesetzt ist, ab.
- 1: Zapfenlageranordnung
- 2: Kreuzgelenkanordnung
- 3: Zapfenkreuz
- 4: Gelenkgabel
- 5: Zapfenanordnung
- 6, 7: Zapfen
- 8, 9: Gelenkgabelhälfte
- 10, 11: Lagerbohrung einer Gelenkgabelhälfte
- 12, 13: Lageranordnung einer Gelenkgabelhälfte
- 14, 15: Radiallager
- 16.1, 17.1: Außenring der Radiallager
- 16.2, 17.2: Wälzelemente des Radiallagers
- 16.3, 17.3: Innenring des Radiallagers
- 18, 19: Axiallager
- 18.1: Wälzelemente des Axiallagers
- 18.2: äußere Lauffläche des Axiallagers
- 18.3: innere Lauffläche des Axiallagers
- 20, 21: von der Gelenkachse G wegweisende Stirnseite der Zapfen
- 22, 23: Zapfenbohrung
- 22.1: erster Teilbereich der Zapfenbohrung
- 22.2: zweiter Teilbereich der Zapfenbohrung
- 24, 25: zur Gelenkachse G gerichtete Stirnfläche der Blindbohrung 10, 11
- 28, 29: deckelförmiges Element
- 30, 31: von der Gelenkachse G wegweisende Stirnseite des deckelförmigen Elementes
- 32, 33: Sicherungsring
- 34.1, 35.1: erster Teilbereich des deckelförmigen Elementes
- 34.2, 35.2: zweiter, elastischer Teilbereich des deckelförmigen Elementes
- 34.3, 35.3: dritter Teilbereich des deckelförmigen Elementes
- 36.1: Außenumfang des ersten Teilbereiches
- 36.2: Außenumfang des zweiten Teilbereiches
- 36.3: Außenumfang des dritten Teilbereiches
- 37: von der Gelenkachse G weggerichtete Fläche der Zapfenbohrung
- 38: die innere Lauffläche des Axiallagers tragendes Element
- 39, 40: Einschnürung
- 42: Anschlag für Außenring-Radiallager
- 44: zum Außenring des Radiallagers hinweisende Fläche des Anschlages
- 46: zur Gelenkachse G hinweisende Stirnfläche des Außenringes des Radiallagers
- 48: von Gelenkachse G wegweisende Stirnseite des Innenringes des Radiallagers
- 50: Bund
- 52: zur Gelenkachse G hingerichtete Stirnfläche des Bundes 50
- 54: von G weggerichtete Stirnseite des Bundes
- 58: Anschlagfläche
- 60: Außenfläche des Zapfens 6
- 62: Dichtungshaltevorrichtung
- 63: Innenfläche der Zapfenbohrung
- 64: sphärisches Lager
- 65: erstes Teilelement des sphärischen Lagers
- 66: zweites Teilelement des sphärischen Lagers
- 67, 68: Kontaktflächen
- 69: zur Gelenkachse G weisende Fläche des sphärischen Lagers
- 70: Mittel
- 71: Druckscheibe
- 72: Mutter
- 73: bolzenartiges Element
- 74: Gewindegang

## Patentansprüche

1. Kreuzgelenkanordnung (2) für den Einsatz in Gelenkwellen
1.1 mit wenigstens einer, aus zwei Gelenkgabelhälften (8, 9), umfassend wenigstens jeweils einen Flanschteil und einen Lagerteil, bildbaren Gelenkgabel (4);
1.2 mit einer, in der Gelenkgabel (4) mittels einer, einer Lagerbohrung (10, 11) im Lagerteil der jeweiligen Gelenkgabelhälfte (8, 9) zugeordneten Lageranordnung (12, 13) gelagerten Zapfenanordnung (5) eines Zapfenkreuzes (3), wobei die Lageranordnung (12, 13) wenigstens ein Axiallager (18, 19) mit Wälzelementen zur Abstützung der durch Querbeschleunigung entstehenden, in Richtung von der Gelenkachse weg in Richtung der jeweiligen Gelenkgabelhälfte wirkenden Axialkräfte umfaßt; **gekennzeichnet durch** die folgenden Merkmale:
1.3 die Lagerbohrungen (10, 11) der einzelnen Gelenkgabelhälften (8, 9) sind als Blindbohrung ausgeführt;
1.4 das Axiallager ist im Bereich der Stirnseite (20, 21) des in der Gelenkgabelhälfte (8, 9) gelagerten Zapfens (6, 7) angeordnet;
1.5 die Laufflächen des Axiallagers (18, 19) sind in Richtung der Zapfenachse Z1 der in der Gelenkgabel (4) gelagerten Zapfenanordnung (5) drucksteif ausgeführt;
1.6 wenigstens eine Laufbahn des Axiallagers (18, 19) stützt sich über Mittel zur wenigstens mittelbaren elastischen Abstützung an der Gelenkgabel (4) oder dem Zapfen des in der entsprechenden Gelenkgabelhälfte (8, 9) gelagerten Zapfens (6, 7) ab.

2. Kreuzgelenkanordnung (2) für den Einsatz in Gelenkwellen
2.1 mit wenigstens einer, aus zwei Gelenkgabelhälften (8, 9), umfassend wenigstens jeweils einen Flanschteil und einen Lagerteil, bildbaren Gelenkgabel (4):
2.2 mit einer, in der Gelenkgabel (4) mittels einer, einer Lagerbohrung (10, 11) im Lagerteil der jeweiligen Gelenkgabelhälfte (8, 9) zugeordneten Lageranordnung (12, 13) gelagerten Zapfenanordnung (5) eines Zapfenkreuzes (3), wobei die Lageranordnung (12, 13) wenigstens ein Axiallager (18, 19) zur Abstützung der durch Querbeschleunigung entstehenden, in Richtung von der Gelenkachse weg in Richtung der jeweiligen Gelenkgabelhälfte wirkenden Axialkräfte umfaßt; **gekennzeichnet durch** die folgenden Merkmale:
2.3 die Lagerbohrung (10, 11) der einzelnen Gelenkgabelhälften (8, 9) ist mit einem formschlüssigen Einsatz verschlossen;
2.4 das Axiallager ist im Bereich der Stirnseite (20, 21) des in der Gelenkgabelhälfte (8, 9) gelagerten Zapfens (6, 7) angeordnet;
2.5 die Laufflächen des Axiallagers (18,19) sind in Richtung der Zapfenachse Z1 der in der Gelenkgabel (4) gelagerten Zapfenanordnung (5) drucksteif ausgeführt;
2.6 wenigstens einer Laufbahn des Axiallagers (18, 19) stützt sich über Mittel zur wenigstens mittelbaren elastischen Abstützung an der Gelenkgabel (4) oder dem Zapfen des in der entsprechenden Gelenkgabelhälfte (8, 9) gelagerten Zapfens (6, 7) ab.

3. Kreuzgelenkanordnung (2) nach Anspruch 1 oder Anspruch 2, **gekennzeichnet durch** die folgenden Merkmale;
3.1 die Mittel umfassen wenigstens ein Bauelement mit wenigstens einem elastisch ausgeführten Teilbereich;
3.2 der elastisch ausgeführte Teilbereich ist zwischen wenigstens einer Laufbahn des Axiallagers und einem daran anschließenden Element in Form der Gelenkgabel (4) bei Ausführung mit Blindbohrung oder dem formschlüssigen Einsatz oder des Zapfens (6, 7) angeordnet.

4. Kreuzgelenkanordnung nach Anspruch 3, **dadurch gekennzeichnet, daß** der elastische Teilbereich durch die Ausführung des Bauelementes als bauliche Einheit aus Einzelelementen mit unterschiedlichen Werkstoffen erzeugt wird.

5. Kreuzgelenkanordnung nach einem der Ansprüche 3 oder 4, **dadurch gekennzeichnet, daß** der elastische Teilbereich durch die geometrische Gestaltung des Bauelementes realisiert wird.

6. Kreuzgelenkanordnung (2) nach Anspruch 5, **gekennzeichnet durch** die folgenden Merkmale:
6.1 das Bauelement mit einem elastischen Teilbereich (34.2, 35.2) ist in Form eines deckelförmigen Elementes (28, 29) ausgeführt;
6.2 das deckelförmige Element (28, 29) umfaßt wenigstens drei Teilbereiche, einen ersten Teilbereich (34.1, 35.1), einen zweiten Teilbereich (34.2, 35.2) und einen dritten Teilbereich (34.3, 35.3);
6.3 wenigstens der erste (34.1, 35.1) oder der dritte Teilbereich (34.3, 35.3) des deckelförmigen Elementes (28, 29) stützt mittelbar oder direkt eine Lauffläche für das Axiallager (18, 19) ab;
6.4 der erste Teilbereich (34.1, 35.1) und der dritte Teilbereich (34.3, 35.3) des deckelförmigen Elementes (28, 29) sind in Einbaulage in Richtung der Zapfenachse (Z1) des in der Gelenkgabel gelagerten Zapfens betrachtet drucksteif ausgeführt.

7. Kreuzgelenkanordnung (2) nach einem der Ansprüche 1 bis 6, **dadurch gekennzeichnet, daß** das Axiallager (18, 19) in einem Bereich außerhalb der Stirnfläche (20, 21) des in der Gelenkgabelhälfte (8, 9) gelagerten Zapfens (6, 7) des Zapfenkreuzes (3) angeordnet ist.

8. Kreuzgelenkanordnung nach einem der Ansprüche 1 bis 6, **dadurch gekennzeichnet, daß** das Axiallager (18, 19) innerhalb einer an der Stirnfläche des in der Gelenkgabel (4) gelagerten Zapfens (6, 7) eingelagerten Zapfenbohrung (22, 23) angeordnet ist.

9. Kreuzgelenkanordnung nach Anspruch 8, **gekennzeichnet durch** die folgenden Merkmale:
9.1 die in Richtung der Zapfenachse (Z1) des in der Gelenkgabel (4) gelagerten Zapfens (6, 7) innere Lauffläche (18.1) des Axiallagers (18) stützt sich wenigstens mittelbar an der von der Gelenkachse G wegweisenden Fläche (37) der Zapfenbohrung (22, 23) ab;
9.2 die in Richtung der Zapfenachse Z1 betrachtete äußere Lauffläche (18.2) des Axiallagers (18) wird vom deckelförmigen Element (28, 29) gebildet.

10. Kreuzgelenkanordnung nach einem der Ansprüche 1 bis 10, **dadurch gekennzeichnet, daß** diese zwei aus jeweils zwei Gelenkgabelhälften bildbare Gelenkgabeln umfaßt, deren Lagerbohrungen als Blindbohrungen ausgeführt sind oder ein- oder zweiteilig mit formschlüssig gehaltenem Deckel.

## Claims

1. A universal joint arrangement (2) for use in universal joint shafts
1.1 with at least one yoke (4) which is formed from two halves (8, 9) of the yoke, comprising at least a flange part each and a bearing part each;
1.2 with a journal arrangement (5) of a journal cross (3), which journal arrangement (5) is held by means of a bearing arrangement (12, 13) associated with a bearing hole (10, 11) in the bearing part of the respective half (8, 9) of the yoke, with the bearing arrangement (12, 13) comprising at least one axial bearing (18, 19) with rolling elements for supporting the axial forces arising from the transversal acceleration and acting in the direction away from the joint axis in the direction of the respective half of the yoke; **characterized by** the following features:
1.3 the bearing holes (10, 11) of the individual halves (8, 9) of the yoke are arranged as a blind bore;
1.4 the axial bearing is arranged in the region of the face side (20, 21) of the journal (6, 7) held in the half (8, 9) of the yoke;
1.5 the bearing surfaces of the axial bearing (18, 19) are provided with a configuration rigid in compression in the direction of the journal axis Z1 of the journal arrangement (5) held in the yoke (4);
1.6 at least one bearing surface of the axial bearing (18, 19) rests via means for at least indirect elastic support on the yoke (4) or the journal of the journal (6, 7) held in the respective half (8, 9) of the yoke.

2. A universal joint arrangement (2) for use in universal joint shafts
2.1 with at least one yoke (4) which is formed from two halves (8, 9) of the yoke, comprising at least a flange part each and a bearing part each;
2.2 with a journal arrangement (5) of a journal cross (3), which journal arrangement (5) is held by means of a bearing arrangement (12, 13) associated with a bearing hole (10, 11) in the bearing part of the respective half (8, 9) of the yoke, with the bearing arrangement (12, 13) comprising at least one axial bearing (18, 19) for supporting the axial forces arising from the transversal acceleration and acting in the direction away from the joint axis in the direction of the respective half of the yoke; **characterized by** the following features:
2.3 the bearing hole (10, 11) of the individual halves (8, 9) of the yoke is sealed with an interlocking insert;
2.4 the axial bearing is arranged in the region of the face side (20, 21) of the journal (6, 7) held in the half (8, 9) of the yoke;
2.5 the bearing surfaces of the axial bearing (18, 19) are provided with a configuration rigid in compression in the direction of the journal axis Z1 of the journal arrangement (5) held in the yoke (4);
2.6 at least one bearing surface of the axial bearing (18, 19) rests via means for at least indirect elastic support on the yoke (4) or the journal of the journal (6, 7) held in the respective half (8, 9) of the yoke.

3. A universal joint arrangement (2) according to claim 1 or claim 2, **characterized by** the following features:
3.1 the means comprise at least one component with at least one elastically configured partial section;
3.2 the elastically configured partial section is arranged between at least one bearing surface of the axial bearing and an adjacent element in the form of a yoke (4) in the configuration with blind bore or the interlocking insert or the journal (6, 7).

4. A universal joint arrangement according to claim 3, **characterized in that** the elastic partial section produced with different materials by the configuration of the component as a constructional unit made of individual elements.

5. A universal joint arrangement according to one of the claims 3 or 4, **characterized in that** the elastic partial section is realized by the geometrical configuration of the component.

6. A universal joint arrangement (2) according to claim 5, **characterized by** the following features:
6.1 the component with an elastic partial section (34.2, 35.2) is configured in the form of a cover-like element (28, 29);
6.2 the cover-like element (28, 29) comprises at least three partial sections, a first partial section (34.1, 35.1), a second partial section (34.2, 35.2) and a third partial section (34.3, 35.3);
6.3 at least the first (34.1, 35.1) or the third partial section (34.3, 35.3) of the cover-like element (28, 29) supports a bearing surface for the axial bearing (18, 19) indirectly or directly;
6.4 the first partial section (34.1, 35.1) and the third partial section (34.3, 35.3) of the cover-like element (28, 29) are provided with a configuration which is rigid in compression in the installed position as seen in the direction of the journal axis (Z1) of the journal held in the yoke.

7. A universal joint arrangement (2) according to one of the claims 1 to 6, **characterized in that** the axial bearing (18, 19) is arranged in a region outside of the face surface (20, 21) of the journal (6, 7) of the journal cross (3) held in the half (8, 9) of the yoke.

8. A universal joint arrangement according to one of the claims 1 to 6, **characterized in that** the axial bearing (18, 19) is arranged within a journal bore (22, 23) embedded on the face side of the journal (6, 7) held in the yoke (4).

9. A universal joint arrangement according to claim 8, **characterized by** the following features:
9.1 the bearing surface (18.1) of the axial bearing (18) which is the inner one in the direction of the journal axis (Z1) of the journal (6, 7) held in the yoke (4) rests at least indirectly on the surface (37) of the journal bore (22, 23) averted from the joint axis G;
9.2 the bearing surface (18.2) of the axial bearing (18) which is the outer one as seen in the direction of the journal axis Z1 is formed by the cover-like element (28, 29).

10. A universal joint arrangement according to one of the claims 1 to 10, **characterized in that** the same comprises two yokes which can be formed by two halves of yokes each and whose bearing bores as configured as blind bores or by one or two parts with a cover held in an interlocked manner.

## Revendications

1. Dispositif de joint de cardan (2) pour transmission à cardan
1.1 comportant au moins une fourche de joint de cardan (4) formée de deux moitiés de fourche de joint de cardan (8, 9) comprenant respectivement au moins une partie de bride et une partie de palier;
1.2 comportant un dispositif de pivot (5) d'un croisillon (3) disposé dans la fourche de joint de cardan (4) au moyen d'un dispositif de palier (12, 13) correspondant à un alésage de palier (10, 11) ménagé dans la partie de palier de la moitié de fourche de joint de cardan respective (8, 9), dans lequel le dispositif de palier (12, 13) comprend au moins un palier de butée (18, 19) pourvu d'éléments de roulement servant d'appui aux forces axiales qui naissent lors de l'accélération transversale et s'exercent dans une direction partant de l'essieu articulé et se dirigeant vers la moitié de fourche de joint de cardan respective;
**caractérisé en ce que**:
1.3 les alésages de palier (10, 11) des moitiés de fourche de joint de cardan individuelles (8, 9) sont exécutés en tant qu'alésages borgnes;
1.4 le palier de butée est agencé dans la zone de la face avant (20, 21) du pivot (6, 7) disposé dans la moitié de fourche de joint de cardan (8, 9);
1.5 les surfaces de roulement du palier de butée (18, 19) sont formées de façon rigide en direction de l'axe pivot Z1 du dispositif de pivot (5) disposé dans la fourche de joint de cardan (4);
1.6 au moins un chemin de roulement du palier de butée (18, 19) prend appui, grâce à des moyens de support élastiques au moins indirects, sur la fourche de joint de cardan (4) ou le pivot du pivot (6, 7) disposé dans la moitié de fourche de joint de cardan correspondante (8, 9).

2. Dispositif de joint de cardan (2) pour transmission à cardan
2.1 comportant au moins une fourche de joint de cardan (4) formée de deux moitiés de fourche de joint de cardan (8, 9) comprenant au moins respectivement une partie de bride et une partie de palier;
2.2 comportant un dispositif de pivot (5) de croisillon (3) disposé dans la fourche de joint de cardan (4) au moyen d'un dispositif de palier (12, 13) correspondant à un alésage de palier (10, 11) ménagé dans la partie de palier de la moitié de fourche de joint de cardan respective (8, 9), dans lequel le dispositif de palier (12, 13) comprend au moins un palier de butée (18, 19) servant d'appui aux forces axiales qui naissent lors de l'accélération transversale et s'exercent dans une direction partant de l'essieu articulé et se dirigeant vers la moitié de fourche de joint de cardan respective;
**caractérisé en ce que**:
2.3 l'alésage de palier (10, 11) des moitiés de fourche de joint de cardan individuelles (8, 9) est obturé par un insert autobloquant ;
2.4 le palier de butée est agencé dans la zone de la face avant (20, 21) du pivot (6, 7) disposé dans la moitié de fourche de joint de cardan (8, 9);
2.5 les surfaces de roulement du palier de butée (18, 19) sont formées de façon rigide en direction de l'axe pivot Z1 du dispositif de pivot (5) disposé dans la fourche de joint de cardan (4);
2.6 au moins un chemin de roulement du palier de butée (18, 19) prend appui, grâce à des moyens de support élastiques au moins indirects, sur la fourche de joint de cardan (4) ou le pivot du pivot (6, 7) disposé dans la moitié de fourche de joint de cardan correspondante (8, 9).

3. Dispositif de joint de cardan (2) selon la revendication 1 ou la revendication 2, **caractérisé en ce que**:
3.1 les moyens comprennent au moins un élément pourvu d'au moins une zone partielle formée de façon élastique;
3.2 la zone partielle formée de façon élastique est agencée entre au moins un chemin de roulement du palier de butée et un élément contigu à celui-ci prenant la forme de la fourche de joint de cardan (4) lors de l'exécution de l'alésage borgne ou de l'insert autobloquant ou du pivot (6, 7).

4. Dispositif de joint de cardan selon la revendication 3, **caractérisé en ce que** :
la zone partielle élastique est produite lors de la réalisation de l'élément en tant qu'unité structurelle formée d'éléments individuels à partir de différents matériaux.

5. Dispositif de joint de cardan selon l'une des revendications 3 ou 4, **caractérisé en que** la zone partielle élastique est réalisée à partir de la conception géométrique de l'élément.

6. Dispositif de joint de cardan (2) selon la revendication 5, **caractérisé en ce que**:
6.1 l'élément pourvu d'une zone partielle élastique (34.2, 35.2) est réalisé sous forme d'un élément formant couvercle (28, 29);
6.2 l'élément formant couvercle (28, 29) comprend au moins trois zones partielles, une première zone partielle (34.1, 35.1), une deuxième zone partielle (34.2, 35.2), et une troisième zone partielle (34.3, 35.3);
6.3 au moins la première zone partielle (34.1, 35.1) ou la troisième zone partielle (34.3, 35.3) de l'élément formant couvercle (28, 29) prend appui de façon directe ou indirecte sur une surface de roulement du palier de butée (18, 19);
6.4 la première zone partielle (34.1, 35.1) et la troisième zone partielle (34.3, 35.3) de l'élément formant couvercle (28, 29) sont formées de façon rigide dans la position de montage vues en direction de l'axe pivot (Z1) du pivot disposé dans la fourche de joint de cardan.

7. Dispositif de joint de cardan (2) selon l'une des revendications 1 à 6, **caractérisé en ce que** le palier de butée (18, 19) est agencé dans une zone située à l'extérieur de la surface avant (20, 21) du pivot (6, 7) du croisillon (3) disposé dans la moitié de fourche de joint de cardan (8, 9).

8. Dispositif de joint de cardan selon l'une des revendications 1 à 6, **caractérisé en ce que** le palier de butée (18, 19) est agencé à l'intérieur d'un alésage de pivot (22, 23) ménagé dans la surface avant du pivot (6, 7) disposé dans la fourche de joint de cardan (4).

9. Dispositif de joint de cardan selon la revendication 8, **caractérisé en ce que**:
9.1 la surface de roulement intérieure (18.1) du palier de butée (18) vue en direction de l'axe pivot (Z1) du pivot (6, 7) disposé dans la fourche de joint de cardan (4) prend appui de façon au moins indirecte sur la surface (37) de l'alésage de pivot (22, 23) qui s'éloigne de l'essieu articulé G;
9.2 la surface de roulement extérieure (18.2) du palier de butée (18) vue en direction de l'axe du pivot Z1 est formée par l'élément formant couvercle (28, 29).

10. Dispositif de joint de cardan selon l'une des revendications 1 à 10, **caractérisé en ce que** celui-ci comprend deux fourches de joint de cardan formées respectivement de deux moitiés de fourche de joint de cardan et dont les alésages de palier sont exécutés en tant qu'alésages borgnes ou sont constitués d'une ou deux parties avec un couvercle à verrouillage autobloquant.
